# EUROPÄISCHE PATENTSCHRIFT

(11) **EP 2 229 324 B1**
(45) Veröffentlichungstag und Bekanntmachung des Hinweises auf die Patenterteilung: **07.09.2016**
(21) Anmeldenummer: 08856469.5
(22) Anmeldetag: 27.11.2008
(51) Int. Cl.: B65C 9/18, B65C 9/22

(54) **VERFAHREN ZUM ETIKETTIEREN VON BEHÄLTERN SOWIE ETIKETTIERSTATION**
METHOD FOR LABELING CONTAINERS AND LABELING STATION
PROCÉDÉ D'ÉTIQUETAGE DE RÉCIPIENTS ET POSTE D'ÉTIQUETAGE

(30) Priorität: 07.12.2007 DE 102007059244
(43) Veröffentlichungstag der Anmeldung: 22.09.2010
(73) Patentinhaber: KHS GmbH, 44143 Dortmund (DE)
(72) Erfinder: DECKERT, Lutz, 45721 Haltern am See (DE)
(86) Internationale Anmeldenummer: PCT/EP2008/010094
(87) Internationale Veröffentlichungsnummer: WO 2009/071237

(56) Entgegenhaltungen:
- WO-A-2005/115847
- DE-A1- 4 417 707
- DE-A1-102005 058 374
- DE-U1-202006 012 400
- US-A- 2 984 245
- US-A1- 2008 014 344

## Beschreibung

Die Erfindung bezieht sich auf ein Verfahren zum Etikettieren von Flaschen oder dergleichen Behältern gemäß Oberbegriff Patentanspruch 1 sowie auf eine Etikettierstation einer Etikettiermaschine zum Durchführen dieses Verfahrens gemäß Oberbegriff Patentanspruch 13.

Speziell bezieht sich die Erfindung auf ein Verfahren bzw. auf eine Etikettierstation zum Etikettieren von Flaschen oder dergleichen Behältern mit Etiketten, die von einem band- oder bahnförmigen Etikettenmaterial (Rollenmaterial) durch Abtrennen jeweils einer einem Etikett entsprechenden Länge erzeugt werden.

Bei bekannten Verfahren bzw. Etikettierstationen dieser Art werden die von dem bahn- oder bandförmigen Etikettenmaterial abgetrennten und auf einem Transferelement, beispielsweise auf einer Transfer- oder Vakuumtrommel gehaltenen Etiketten beleimt und anschließend von dem Transferelement an die an diesem vorbeibewegten Behälter übergeben und dort fixiert. Insbesondere bei einer Rundumetikettierung werden auf der Etikettenrückseite im Bereich der bei der Übergabe vorauseilenden Seite oder Kante sowie im Bereich der bei der Übergabe nacheilenden Seite oder Kante jedes Etiketts beispielsweise streifenförmige Leimaufträge aufgebracht. Das Anlegen der Etiketten an die Behälter erfolgt dann durch Aufwikkeln unter Drehung der Behälter um ihre Behälterachse.

Das Aufbringen des Leimes auf die am Transferzylinder gehaltene Etiketten erfolgt entweder durch eine an der Peripherie der Transfertrommel angeordnete, mit dieser nicht umlaufende Leimwalze oder durch Leimauftragsköpfe, mit denen der Leim auf die Etiketten entweder in einem Kontakt-Verfahren, d.h. bei gegen die Etiketten anliegenden Leimauftragsköpfen, oder in einem kontaktfreien Verfahren, d.h. bei von den Etiketten beabstandeten Leimauftragsköpfen, aufgebracht wird.

Zumindest bei Verwendung von Leimwalzen ist es erforderlich, dass an der kreiszylinderförmigen Umfangsfläche der Transfertrommel gebildeten Aufnahmebereiche für die Etiketten jeweils an ihrem in Drehrichtung der Transfertrommel vorauseilenden sowie nacheilenden Ende erhabene Bereiche bilden, gegen die die Etiketten mit ihren betreffenden Enden bzw. Kanten anliegen, sodass der jeweilige Leimauftrag nur an diesen Enden bzw. Kanten erfolgt. Diese erhabenen Bereiche bedeuten eine aufwändigere Konstruktion und erschweren die Umstellung auf unterschiedliche Etikettenlängen.

Ein wesentlicher Nachteil bekannter Verfahren ist aber u.a. auch, dass insbesondere bei einem Aufbringen des Leims durch die Etiketten berührende leimauftragende Funktionselemente, d.h. durch Leimwalzen oder durch Leimauftragsköpfe, die beim Aufbringen des Leimes gegen das jeweilige Etikett anliegen, die Gefahr besteht, das die Etiketten auf der Transfertrommel verschoben oder sogar ganz oder teilweise den Kontakt mit dieser Trommel verlieren.

Ein weiterer Nachteil bekannter Verfahren ist auch, dass die leimauftragenden Funktionselemente nur zeitweise von dem jeweiligen Etikett abgedeckt sind, nicht aber beispielsweise zwischen zwei an der Transfertrommel aufeinanderfolgenden Etiketten, was zu einer erheblichen Verschmutzung der Transfertrommel durch Leim führt. Dies gilt im besonderen Maß bei Verwendung von Leimwalzen, aber auch bei Verwendung von Leimauftragsköpfen und dabei speziell bei Verwendung von kontakt- oder berührungslos arbeitenden Auftragsköpfen, bei denen die Gefahr einer Verschmutzung u.a. durch Leimverwirbelungen usw. besteht. Verschmutzungen führen zu Funktionsstörungen der jeweiligen Etikettiermaschine und bedingen auch lange, für die Reinigung notwendige Stillstandszeiten.

Eine entsprechende Vorrichtung wurde beispielsweise durch WO 2005/115847 A1, welche sich mit einer Maschine zur Etikettierung von Behältern befasst, vorgestellt. Mehr im Detail sieht diese Schrift vor, die Behälter mit Etiketten aus einem endlosen Etikettenbandmaterial zu etikettieren. Dazu ist weiterhin vorgesehen, das Bandmaterial über eine Fördervorrichtung von einer Etikettenbandvorratsrolle abzuziehen und dann an eine so genannte Vakuumtrommel zu übergeben. Diese Vakuumtrommel führt eine kontinuierliche Drehbewegung aus und fördert so das von ihr gehaltene Etikettenbandmaterial zu den zu etikettierenden Behältern. Weiterhin sieht die WO 2005/115847 vor, das Etikettenbandmaterial, während es von der Vakuumtrommel gehalten wird, mit Leim zu versehen, damit die Etiketten auf den Behältern haften. Nach dem Aufbringen des Leims ist weiterhin vorgesehen, dass die einzelnen Etiketten durch Abtrennen von dem Etikettenbandmaterial gebildet werden, wobei das Etikettenbandmaterial noch immer von der Vakuumtrommel gehalten wird. Die Vorgehensweise, dass der Leim auf das Etikettenbandmaterial aufgebracht wird, während dieses von der Vakuumtrommel gehalten wird ist sehr nachteilig, da auf diese Weise leicht Leim von der Vakuumtrommel angesaugt werden kann, was häufig zu Verstopfungen der in der Vakuumtrommel angeordneten Bohrungen oder Leitungen für die Führung des Unterdruckes führt und somit zeitaufwändige Reinigungsarbeiten nach sich zieht. Diese Reinigungsarbeiten werden in der Praxis als äußerst nachteilig empfunden.

US 2,984,245 offenbart ein Verfahren gemäß dem Oberbegriff des Anspruchs 1 und eine Etikettierstation gemäß dem Oberbegriff des Anspruchs 13.

Die Verwendung von Leimwalzen hat außerdem den Nachteil, dass der Leim auf einer sehr großen Fläche der umgebenden Luft ausgesetzt ist, sodass speziell dann, wenn heißer Leim verwendet wird, dessen Bestandteile abdampfen und sich auf angrenzende Bauteile oder Funktionselemente der Etikettierstation niederschlagen können. Außerdem wird speziell beim Abdampfen von Bestandteilen des heißen Leims die Qualität dieses Leims beeinträchtigt.

Leimauftragsköpfe, die ein berührungsloses Aufbringen des Leims ermöglichen, haben weiterhin den Nachteil, dass eine komplizierte und zeitaufwendige Einstellung dieser Auftragsköpfe erforderlich ist, und zwar u.a. schon deswegen, weil die jeweils gewünschten Leimaufträge nur bei einer hochpräzisen Anordnung und Ausrichtung der Auftragsköpfe erreicht wird, insbesondere auch unter Einhaltung eines exakten Abstandes zwischen dem jeweiligen Auftragskopf und den Etiketten.

Aufgabe der Erfindung ist es, ein Verfahren aufzuzeigen, welches die vorgenannten Nachteile vermeidet und mit dem ohne die Gefahr einer Verschmutzung der verwendeten Etikettierstation oder deren Funktionselemente ein Leimauftrag mit hoher Präzision bei Verwendung eines bahn- oder bandförmigen Etikettenmaterials möglich ist. Zur Lösung dieser Aufgabe ist ein Verfahren entsprechend dem Patentanspruch 1 ausgebildet. Eine Etikettierstation ist Gegenstand des Patentanspruchs 13.

Das Aufbringen des Leims auf das bahn- oder bandförmige Etikettenmaterial erfolgt vor dem Abtrennen der
Etiketten von diesem Materials.

Das Aufbringen des Leims wird mit wenigstens einem düsenartigen Leimauftragskopf durchgeführt, und zwar bevorzugt mit einem Leimauftragskopf, der zumindest während des Aufbringens in Kontakt mit dem Etikettenmaterial steht. Mit dem jeweiligen Leimauftragskopf lassen sich beispielsweise sehr schmale streifenförmige Leimaufträge, z.B. mit einer Breite von beispielsweise nur 1 - 2 mm leimsparend und mit hoher Präzision, auch bei hoher Leistung der Etikettierstation bzw. der Etikettiermaschine (hohe Anzahl der etikettierten Behälter je Zeiteinheit) problemlos erreichen. Durch das Etikettenmaterial ist das leimauftragende Funktionselement, nämlich der Leimauftragskopf bzw. dessen wenigstens eine Düse während des Betriebes der Etikettierstation ständig abgedeckt. Ein Verschmutzen von Funktionselementen dieser Station mit Leim oder Leimbestandteilen ist dadurch wirksam vermieden.

Der verwendete Leimauftragskopf ist vorzugsweise so ausgebildet, dass mit ihm ein intermittierendes Aufbringen des Leims, beispielsweise zur Erzeugung von schmalen, streifenförmigen Leimaufträgen, aber auch ein permanentes Aufbringen des Leims möglich sind, um so im letzten Fall Etiketten zu erhalten, die an ihrer Rückseite mit einem sich über die gesamte Etikettenlänge erstreckende Leimauftrag versehen sind. Auch hier besteht der Vorteil der Erfindung darin, dass dieser sich über die gesamte Etikettenlänge erstreckende Leimauftrag mit hoher Präzision und unter Vermeidung einer Verschmutzung von Funktionselementen der Etikettierstation erfolgt.

Bei einer bevorzugten Ausführungsform ist der verwendete Leimauftragskopf als Schlitzdüse ausgebildet, und zwar vorzugsweise als Schlitzdüse, bei der die Länge sowie auch Breite des Düsenschlitzes durch eine Maske bestimmt ist, sodass durch Einlegen unterschiedlicher Masken u.a. die Breite des jeweiligen Leimauftrages in der Achsrichtung senkrecht zur Längserstreckung des Etikettenmaterials variiert bzw. an die entsprechende Breite des Etikettenmaterials angepasst werden kann.

Mittels intermittierenden Aufbringens Leimes kann durch gezieltes Ein- und Ausschalten des Leimauftragskopfes unter Berücksichtigung der Breite des Düsenspaltes die Breite der streifenförmigen, senkrecht oder im Wesentlichen senkrecht zur Längserstreckung des Etikettenmaterials verlaufenden Leimaufträge problemlos gesteuert und/oder variiert werden.

Zumindest während des Aufbringens des Leimes liegt das Etikettenmaterial vorzugsweise mit einem Anpressdruck gegen den Leimauftragskopf an. Dieser Anpressdruck wird beispielsweise durch die Bahnspannung erzeugt, die das Etikettenmaterial im Bereich des Leimauftragskopfes aufweist, oder aber dadurch, dass das Etikettenmaterial an der dem Leimauftragskopf abgewandten Seite durch ein Anpresselement, beispielsweise eine Anpressrolle gegen den Leimauftragskopf angedrückt wird.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an einem Ausführungsbeispiel näher erläutert. Es zeigen:
Fig. 1 in perspektivischer Teildarstellung den Rotor einer Etikettiermaschine umlaufender Bauart zusammen mit einer Teildarstellung einer Etikettierstation;
Fig. 2 in Draufsicht die Etikettierstation zusammen mit dem Rotor;

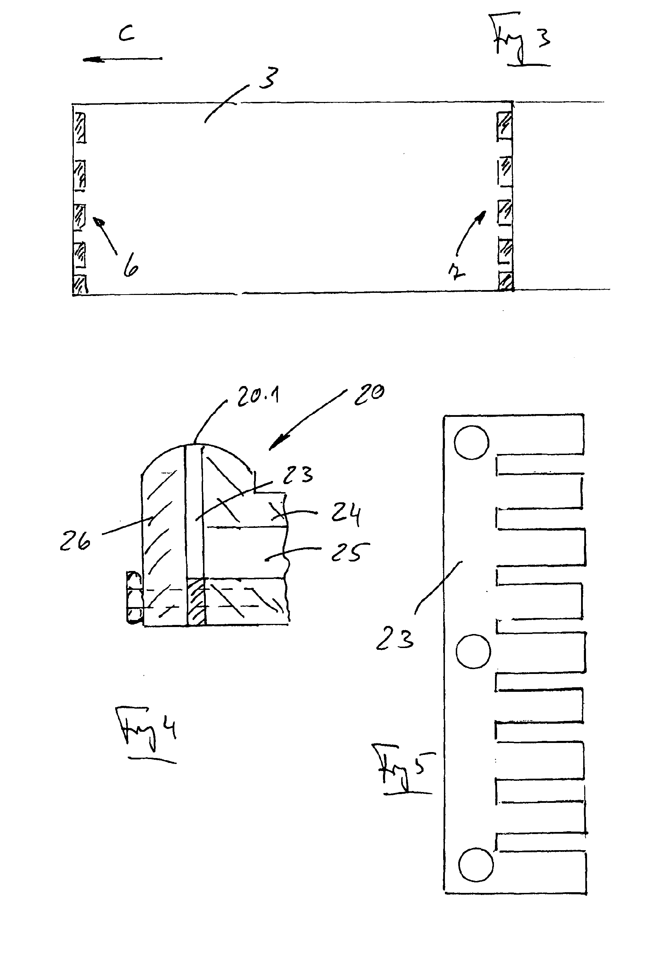

Fig. 3 in vereinfachter Darstellung ein mit Leimaufträgen versehenes Etikett nach dem Abtrennen vom Etikettenmaterial;
Fig. 4 in Teildarstellung einen Schnitt durch eine den Leimauftragskopf bildende Spaltdüse der Etikettierstation;
Fig. 5 in Einzeldarstellung eine Blende zur Verwendung bei der Spaltdüse der Figur 3.

In den Figuren ist 1 der um eine vertikale Maschinenachse in Richtung des Pfeils A umlaufend angetriebene Rotor einer Etikettiermaschine umlaufender Bauart zum Etikettieren von Flaschen 2 mit jeweils einem Rundumetikett 3. Mit 4 ist eine Etikettierstation (Etikettieraggregat) bezeichnet, welche an der Peripherie des Rotors 1 mit diesem nicht umlaufend vorgesehen ist, und zwar zum Aufbringen der Etiketten 3 auf die mit ihrem Boden auf Behälterträgern 5 (Flaschenteller) aufrechtstehend angeordneten und mit dem Rotor 1 am Etikettieraggregat 4 vorbeibewegten Flaschen 2.

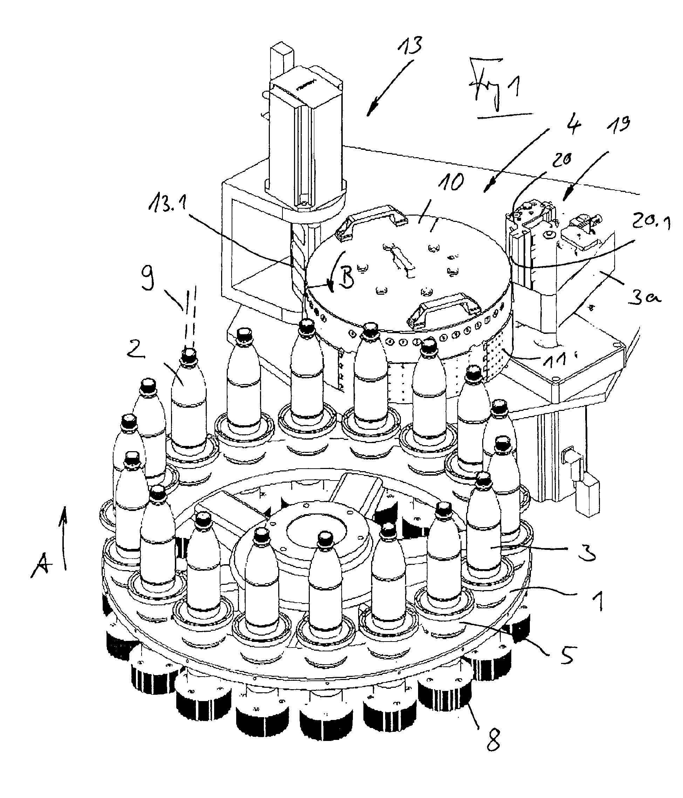

Zur Übergabe an die Flaschen 2 sowie zum dortigen Fixieren werden die rechteckförmigen Etiketten 3 im Etikettieraggregat 4 an ihrer bei der Übergabe an eine Flasche 2 vorauseilenden Schmalseite sowie an der bei der Übergabe nacheilenden Schmalseite jeweils mit einem streifenförmigen Leimauftrag 6 bzw. 7 versehen, und zwar an der Etikettenrückseite, sodass mit dem vorauseilenden Leimauftrag 6 jedes Etikett 3 an einer zu etikettierenden Flasche 2 haftet und dann unter Drehen der betreffenden Flasche 2 um ihre Hochachse das Etikett 3 auf die Flasche 2 bzw. auf deren Flaschenrumpf aufgewickelt und mit dem nacheilenden Leimauftrag 7 überlappend an der Flasche fixiert wird. Zum Drehen der Flaschen 2 weisen die Behälterträger 5 jeweils einen Antrieb 8 auf. Weiterhin sind die Flaschen 2 durch Stempel, von denen einer schematisch in der Figur 1 mit unterbrochenen Linien 9 angedeutet ist, gegen Umfallen auf den Behälterträgern 5 gesichert. In bekannter Weise werden die zu etikettierenden Flaschen 2 dem Rotor 1 bzw. den Behälterträgern 5 an einem Flascheneinlauf zugeführt und die etikettierten Flaschen 2 werden dem Rotor 1 an einem Flaschenauslauf entnommen.

Die einzelnen Etiketten 3 werden im Etikettieraggregat 4 durch Abtrennen von einem bahn- oder bandförmigen Etikettenmaterial 3a erzeugt und dabei vor diesem Abtrennen mit dem vorderen und rückwärtigen Leimauftrag 6 bzw. 7 versehen. Unter anderem zur Reduzierung des Leimverbrauchs sind die Leimaufträge 6 und 7 bei der dargestellten Ausführungsform unterbrochen so aufgeführt, dass sie jeweils aus mehreren Leimpunkten bestehen, die in einer sich in vertikaler Richtung erstreckenden Reihe, d.h. in einer Reihe parallel zu der betreffenden Schmalseite des Etiketts 3 angeordnet sind.

Das Etikettieraggregat 4 umfasst u.a. eine als Vakuumtrommel ausgebildete Transfertrommel 10, die synchron mit dem Rotor 1 um eine Achse parallel zur Rotorachse umlaufend antreibbar ist, und zwar in Richtung des Pfeils B und damit entgegen der Drehrichtung des Rotors 1. Die Transfertrommel 10 bildet an ihrer die Trommelachse konzentrisch umschließenden kreiszylinderförmigen Umfangsfläche eine Vielzahl von in Drehrichtung B aufeinander folgenden Etikettenaufnahmebereichen mit jeweils mehreren Öffnungen 11, die hauptsächlich Vakuumöftnungen, teilweise aber auch Öffnungen zum gesteuerten Ausbringen von Druckluft sind, und zwar für die Übergabe des jeweiligen Etiketts an eine Flasche 2. Jedem Etikettenaufnahmebereich ist auch eine Messerleiste 12 zugeordnet, die im Zusammenwirken mit einem an der Peripherie der Trommel 10 angeordneten und mit dieser Trommel nicht umlaufenden Messer 13.1 einer Schneidstation 13, beispielsweise mit einem rotierenden Messer zur Abtrennung der Etiketten 3 von dem am Umfang der Trommel 1 gehaltenen Etikettenmaterial 3a dient.

Das Etikettenmaterial 3a wird von einem nicht dargestellten Vorrat (Etikettenrolle) in Richtung des Pfeils C gesteuert abgezogen, und zwar mit einer Vorschubeinheit 14, die im Wesentlichen aus zwei Walzen 15 und 16 besteht, die mit ihren Achsen parallel zueinander sowie auch parallel zur Achse der Transfertrommel 10 orientiert sind und von denen die Walze 16 durch den Antrieb der Etikettierstation 4 um ihre Achse umlaufend angetrieben ist. Die Walze 15 ist frei drehbar in einem Rahmen 17 gelagert und durch einen Stellantrieb, beispielsweise durch einen pneumatischen Stellantrieb 18 zustellbar. Beide Walzen 15 und 16 bilden zwischen
sich einen Förderspalt, durch den das Etikettenmaterial 3a hochkant, d.h. in einer vertikalen Ebene orientiert hindurchgeführt ist, sodass bei zugestellter Walze 15 und umlaufend angetriebener Walze 16 das Etikettenmaterial 3a von dem Vorrat synchron mit der Drehbewegung der Transfertrommel 10 abgezogen wird. Bei der dargestellten Ausführungsform umschließt das Etikettenmaterial 3a die Walze 16 auf einem Winkelbereich von etwa 90° und verläuft dann mit einer Teillänge 3a.1 ausgehend von der Walze 16 in etwa tangential an die Umfangsfläche der Transfertrommel 10. Die Vorschubeinheit 14 fördert das Etikettenmaterial längengerecht an die Trommel 10, und zwar beispielsweise gesteuert durch am Etikettenmaterial 3a vorhandene Schneidmarkierungen, die von einer nicht dargestellten Sensoreinheit abgetastet werden.

Zwischen der Walze 16 und der Transfertrommel 10 ist eine Beleimungseinheit 19 mit einer Schlitzdüse 20 vorgesehen, und zwar derart, dass die Teillänge 3a.1 des Etikettenmaterials 3a mit der Etikettenrückseite gegen den einen mehrfach unterbrochenen Düsenspalt 20.1 aufweisenden Leimabgabebereich mit einem aus der Bahnspannung resultierenden Anpressdruck anliegt, und zwar u.a. dadurch, dass die Teillänge 3a.1 an der Schlitzdüse 20 leicht umgelenkt ist und die Fördergeschwindigkeit der Vorschubeinrichtung 14 gegenüber der Förder- bzw. Umfangsgeschwindigkeit der Transfertrommel 10 etwas reduziert ist.

Wie dargestellt, liegt die Schlitzdüse 20 gegen die der Transfertrommel 10 abgewandten Seite des Etikettenmaterials 3a an. Die Leimaufträge 6 und 7 erfolgen jeweils außerhalb der Transfertrommel 10, auf jeden Fall aber bevor das mit der Transfertrommel 10 mitgeführte Etikettenmaterial 3a die von dem Messer 13.1 gebildete Schneidstation 13 erreicht.

Die Zuführung des heißen Leims (z.B. Heißleim oder Heißkleber) an die vorzugsweise beheizte Schlitzdüse 20 erfolgt von einer nicht dargestellten Versorgungseinheit über einen vorzugsweise beheizten Schlauch 21. An der Schlitzdüse 20 bzw. im Bereich des Einlasses dieser Schlitzdüse ist ein beispielsweise elektrisch oder pneumatisch steuerbares Ventil 22 vorgesehen, welches für das Aufbringen der Leimaufträge 6 und 7 die Verbindung zwischen der Leimzuführung (Schlauch 21) und dem mehrfach unterbrochenen Spalt oder Schlitz 20.1 getaktet öffnet und schließt.

Der mehrfach unterbrochene, sich parallel zur Achse der Trommel 10 erstreckende Schlitz 20.1 ist beispielsweise durch ein kammartig ausgeführtes Blendenblech 23 gebildet, welches zwischen einem Düsengehäuseteil 24, welches eine von dem Ventil 22 gesteuerte Leimkammer 25 bildet, und einer Abschlussplatte 26 durch geeignete Mittel, beispielsweise durch Spannschrauben eingespannt derart vorgesehen ist, dass das Blendenblech 23 mit seiner Blechdicke die Breite des Schlitzes 20.1 bestimmt und durch seine kammartige Struktur den mit der Leimkammer 25 in Verbindung stehenden mehrfach unterbrochenen und an der Ober- und Unterseite der Schlitzdüse 20 geschlossenen Schlitz 20.1 bildet. Durch Verwendung unterschiedlicher Masken bzw. Blechblenden 23 ist eine einfache Anpassung der Schlitzdüse 20 an unterschiedliche Breiten des Etikettenmaterials 3a möglich. Ebenso ist durch die Verwendung von Blendenblechen 23 unterschiedlicher Dicke auch die Breite des Schlitzes 20.1 einstellbar und/oder durch die Verwendung von Blendenblechen 23 ohne Kammstruktur sind auch Schlitze 20.1 möglich, die nicht unterbrochen sind.

Durch die Verwendung des unmittelbar an der Schlitzdüse 20 vorgesehen Ventils 22 ist ein intermittierendes Ausbringen des Leims nahezu verzögerungsfrei möglich, sodass auch bei hoher Leistung der Etikettierstation 4 bzw. der Etikettiermaschine, d.h. bei einer hohen Anzahl von etikettierten Flaschen 2 je Zeiteinheit sehr schmale und exakte Leimaufträge 6 und 7 erreichbar sind.

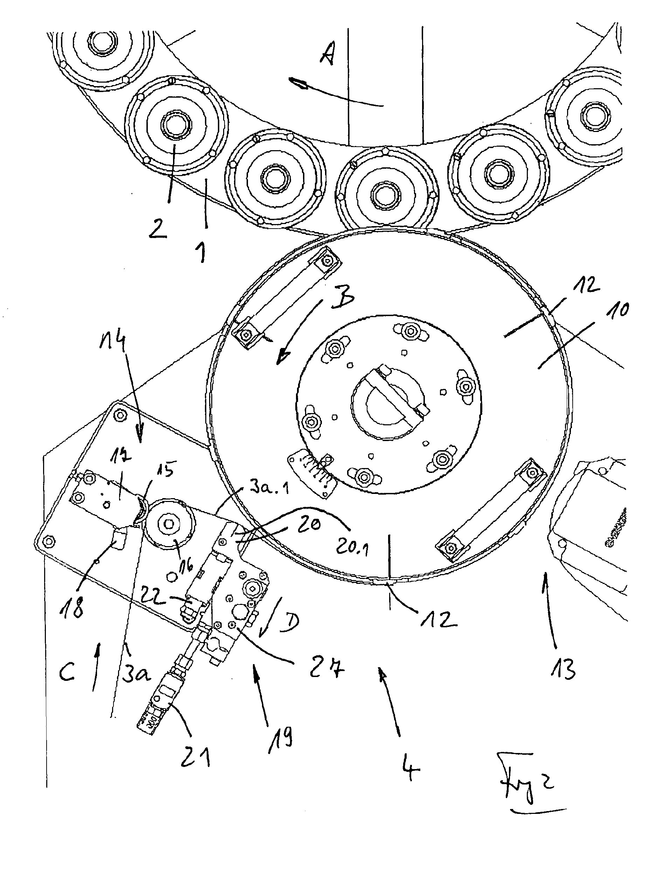

Die Schlitzdüse 20 ist bevorzugt auf einem Träger 27 so angeordnet, dass sie von dem Etikettenmaterial 3a bzw. von der Länge 3a.1 wegbewegbar ist, wie dies in der Figur 2 mit dem Pfeil D angedeutet ist, und zwar zur Vermeidung einer Überhitzung des Etikettenmaterials 3a durch die Schlitzdüse 20 bei einem Stillstand des Etikettierstation 4. Das Wegbewegen oder auch Wegschwenken der Schlitzdüse 20 vom Etikettenmaterial 3a erfolgt vorzugsweise selbsttätig dann, wenn die Förderung des Etikettenmaterials 3a durch die Vorschubeinheit 14 über eine vorgegebene Zeitperiode unterbrochen ist.

Durch das Aufbringen der Leimaufträge 6 und 7 auf das Etikettenmaterial 3a vor dem Trennen in die einzelnen Etiketten 3 wird u.a. ein Verschmutzen der Etikettierstation 4 vermieden. Weiterhin wird auch bei hoher Leistung sehr genaue Leimaufträge 6 und 7 im Bezug auf die vorderen und rückwärtigen Kanten der Etiketten 3 erreicht.

Bei der dargestellten Ausführungsform wird der Leim der Schlitzdüse 20 über den Schlauch 21 zugeführt, ohne das überschüssiger Leim an die Versorgungseinheit zurückgeleitet wird. Hierdurch werden ein mehrfaches Erhitzen und dadurch bedingte Qualitätsverluste des Leims vermieden.

Die Erfindung wurde voranstehend an einem Ausführungsbeispiel beschrieben. Es versteht sich, dass zahlreiche Änderungen sowie Abwandlungen möglich sind.

So wurde vorstehend davon ausgegangen, dass durch intermittierende Ansteuerung des Ventils 22 streifenartige Leimaufträge 6 und 7 erzeugt werden. Grundsätzlich besteht selbstverständlich auch die Möglichkeit, durch entsprechende Ansteuerung des Ventils 22 Leimaufträge in einem nahezu beliebigen Auftragsmuster vorzunehmen, beispielsweise auch einen durchgehenden oder permanenten Leimauftrag. Allen Ausführungen ist aber gemeinsam, dass der Leimauftrag auf das Etikettenmaterial 3a vor dem Trennen in die einzelnen Etiketten 3 erfolgt.

Vorstehend wurde davon ausgegangen, dass der notwendige Anpressdruck des Etikettenmaterials 3a gegen die Schlitzdüse 20 durch die Bahnspannung des Etikettenmaterials 3a bzw. der Teillänge 3a.1 erzeugt wird. Grundsätzlich besteht auch die Möglichkeit, den Anpressdruck des Etikettenmaterials 3a durch ein zusätzliches Abdrückelement, beispielsweise durch eine Andrückrolle zu erzeugen, die an der der Schlitzdüse 20 abgewandten Seite des Etikettenmaterials 3a anliegt und dieses Material gegen die Schlitzdüse 20 andrückt.

Grundsätzlich besteht auch die Möglichkeit, bei entsprechender Ausbildung der Schlitzdüse den jeweiligen Leimauftrag bei geringfügig vom Etikettenmaterial beabstandeter Schlitzdüse zu erzeugen.

### Bezugszeichenliste

- 1: Rotor
- 2: Flasche
- 3: Etikett
- 3a: Etikettenmaterial
- 3a.1: Teillänge des Etikettenmaterials 3a
- 4: Etikettieraggregat
- 5: Behälterträger
- 6, 7: Leimauftrag
- 8: Antrieb
- 9: Stempel
- 10: Transfertrommel
- 11: Öffnung für Vakuum oder Druckluft
- 12: Messerleiste
- 13: Schneidstation
- 13.1: Messer der Schneidstation
- 14: Vorschubeinheit
- 15, 16: Walze
- 17: Rahmen
- 18: Stellantrieb
- 19: Beleimungsstation
- 20: Schlitzdüse
- 20.1: Schlitz
- 21: beheizter Versorgungsschlauch
- 22: Ventil
- 23: Maske bzw. Blendenblech
- 24: Düsengehäuse
- 25: Leimkammer
- 26: Abschlussplatte
- 27: Träger
- A: Drehrichtung des Rotors
- B: Drehrichtung der Etikettenübergabetrommel 10
- C: Förderrichtung des Etikettenmaterials 3a
- D: Wegbewegung der Schlitzdüse 20

## Patentansprüche

1. Verfahren zum Etikettieren von Flaschen oder dergleichen Behältern (2) unter Verwendung eines bahn- oder bandförmigen Etikettenmaterials (3a), wobei die auf die Behälter (2) aufzubringenden Etiketten (3) durch Abtrennen von dem Etikettenmaterial (3a) erzeugt und jeweils mit wenigstens einem Leimauftrag (6, 7) versehen mit einem Transferelement (10) an die am Transferelement (10) vorbeibewegten Behälter (2) übergeben werden, wobei der jeweilige Leimauftrag (6, 7) auf das Etikettenmaterial (3a) vor dem Abtrennen der Etiketten (3) mit wenigstens einem Leimauftragskopf (20) erfolgt, wobei das Aufbringen des jeweiligen Leimauftrags (6, 7) auf das Etikettenmaterial (3a) in einer Förder- oder Vorschubrichtung (C) dieses Materials vor dem Transferelement (10) erfolgt, **dadurch gekennzeichnet, dass** das Aufbringen des jeweiligen Leimauftrags (6, 7) auf das Etikettenmaterial (3a) durch intermittierende Ansteuerung des wenigstens einen düsenartigen Leimauftragskopfes (20) bzw. durch intermittierende
Leimabgabe derart erfolgt, dass die Etiketten (3) nach dem Abtrennen von dem Etikettenmaterial (3a) jeweils an ihrem bei der Übergabe an die Behälter (2) vorauseilenden und/oder nacheilenden Ende partiell mit einem Leimauftrag (6, 7), vorzugsweise partiell mit einem parallel zu diesem Ende bzw. zu dieser Kante
verlaufenden Leimauftrag versehen sind.

2. Verfahren nach Anspruch 1, **dadurch gekennzeichnet, dass** das bahn- oder bandförmige Etikettenmaterial (3a) dem Transferelement (10) zugeführt wird, und dass das Abtrennen der Etiketten (3) von dem Etikettenmaterial (3a) auf dem Transferelement (10) erfolgt.

3. Verfahren nach Anspruch 2, **dadurch gekennzeichnet, dass** als Transferelement eine Transfertrommel (10), vorzugsweise eine Vakuumtrommel verwendet ist, die um eine Trommelachse, vorzugsweise um eine vertikale Trommelachse umlaufend getrieben ist.

4. Verfahren nach einem der vorhergehenden Ansprüche, **dadurch gekennzeichnet, dass** die Etiketten (3) nach dem Abtrennen von dem Etikettenmaterial (3a) mit wenigstens einem Leimauftrag versehen sind, der sich zwischen den bei der
Übergabe an die Behälter vorauseilenden sowie nacheilenden Kanten der Etiketten (3) erstreckt.

5. Verfahren nach einem der vorhergehenden Ansprüche, **dadurch gekennzeichnet, dass** als Leimauftragskopf eine Düse, beispielsweise Schlitzdüse (20) verwendet ist.

6. Verfahren nach einem der vorhergehenden Ansprüche, **dadurch gekennzeichnet, dass** als Leimauftragskopf eine Düse, beispielsweise Schlitzdüse (20) mit mehreren in einer Reihe angeordneten Düsenöffnungen verwendet ist

7. Verfahren nach einem der vorhergehenden Ansprüche, **dadurch gekennzeichnet, dass** das Etikettenmaterial (3a) gegen den wenigstens einen Leimauftragskopf (20) mit einem Anpressdruck angepresst anliegt.

8. Verfahren nach Anspruch 7, **dadurch gekennzeichnet, dass** der Anpressdruck durch die Bahnspannung des Etikettenmaterials (3a) im Bereich des Leimauftragskopfes (20) erzeugt wird.

9. Verfahren nach Anspruch 7 oder 8, **dadurch gekennzeichnet, dass** der Anpressdruck durch ein das Etikettenmaterial (3a) gegen den Leimauftragskopf (20) anpressendes Element, beispielsweise durch eine Anpressrolle erzeugt wird.

10. Verfahren nach einem der vorhergehenden Ansprüche, **dadurch gekennzeichnet, dass** der Leim ein heißer Leim oder ein Heißleim ist.

11. Verfahren nach einem der vorhergehenden Ansprüche, **dadurch gekennzeichnet, dass** der wenigstens eine Leimauftragskopf beheizt wird.

12. Verfahren nach einem der vorhergehenden Ansprüche, **dadurch gekennzeichnet, dass** bei einer Unterbrechung des Etikettierprozesses der wenigstens eine Leimauftragskopf (20) von dem Etikettenmaterial (3a) wegbewegt und/oder weggeschwenkt wird.

13. Etikettierstation einer Etikettiermaschine zum Etikettieren von Flaschen oder dergleichen Behältern (2) unter Verwendung eines bahn- oder bandförmigen Etikettenmaterials (3a), mit wenigstens einer Schneidstation (13) zum Abtrennen der Etiketten von dem Etikettenmaterial (3a), mit wenigstens einer Beleimungsstation oder -einrichtung (19) zum Aufbringen eines Leims sowie mit einem Transferelement (10) zur Übergabe der beleimten Etiketten (3) an die an dem Transferelement (10) vorbeibewegten Behälter (2), wobei die Beleimungsstation (19) in einer Transportrichtung (C) des Etikettenmaterials (3a) vor der Schneidstation (13) vorgesehen ist, wobei die Beleimungsstation (19) in Förderrichtung des Etikettenmaterials (3a) vor dem Transferelement (10) angeordnet ist, **dadurch gekennzeichnet, dass** die Beleimungsstation (19) von wenigstens einem düsenartigen Leimauftragskopf (20) gebildet ist, und dass der wenigstens eine Leimauftragskopf (20) zur gesteuerten Abgabe des Leims, vorzugsweise zur gesteuerten intermittierenden Leimabgabe mit einem Steuerventil (22), beispielsweise mit einem elektrisch oder pneumatisch betätigbaren Steuerventil ausgebildet ist.

14. Etikettierstation nach Anspruch 13, **dadurch gekennzeichnet, dass** der wenigstens eine Leimauftragskopf (20) zum Ausbringen des Leimes im heißen Zustand, beispielsweise zum Ausbringen eines Heißleimes ausgebildet ist.

15. Etikettierstation nach Anspruch 13 oder 14, **dadurch gekennzeichnet, dass** der wenigstens eine Leimauftragskopf (20) zum Ausbringen des Leimes unter Druck ausgebildet ist.

16. Etikettierstation nach einem der vorhergehenden Ansprüche 13-15, **dadurch gekennzeichnet, dass** der wenigstens eine Leimauftragskopf von einer Schlitzdüse (20) gebildet ist, die wenigstens eine schlitzartige Düsenöffnung (20.1) oder mehrere in wenigstens einer Reihe angeordnete Düsenöffnungen aufweist.

17. Etikettierstation nach Anspruch 16, **dadurch gekennzeichnet, dass** die wenigstens eine Düsenöffnung (20.1) oder die Reihe der Düsenöffnungen in einer Achsrichtung senkrecht oder im Wesentlichen senkrecht zu der Längserstreckung des Etikettenmaterials (3a) orientiert sind.

18. Etikettierstation nach einem der vorhergehenden Ansprüche 13-17, **dadurch**
**gekennzeichnet, dass** der wenigstens eine Leimauftragskopf (20) mit einer Quelle zum Zuführen des Leims unter Druck verbunden ist.

19. Etikettierstation nach einem der vorhergehenden Ansprüche 13-18, **dadurch**
**gekennzeichnet, dass** der wenigstens eine Leimauftragskopf (20) an der Peripherie der Transferelement (10) (10) mit dieser nicht umlaufend vorgesehen ist.

20. Etikettierstation nach einem der vorhergehenden Ansprüche 13-19, **dadurch**
**gekennzeichnet, dass** das Transferelement eine um eine Trommelachse umlaufend antreibbare Transfertrommel (10), beispielsweise Vakuumtrommel ist.

21. Etikettierstation nach Anspruch 20, **dadurch gekennzeichnet, dass** die Schneidstation (13) an der Peripherie der Transfertrommel (10) mit dieser nicht umlaufend vorgesehen ist.

22. Etikettierstation nach einem der vorherigen Ansprüche 13-21, **gekennzeichnet durch**
wenigstens eine Förder- oder Vorschubeinheit (14), über die das Etikettenmaterial (3a) dem Transferelement (10) zugeführt wird, wobei der wenigstens eine Leimauftragskopf (20) in Förderrichtung (C) des Etikettenmaterials (3a) zwischen der Förder- oder Vorschubeinheit (14) und dem Transferelement (10) vorgesehen ist.

## Claims

1. Method for labelling bottles or similar containers (2), using a web or strip-shaped labelling material (3a), wherein the labels (3) that are to be applied to the containers (2) are produced by separation from the labelling material (3a), and in each case, provided with at least one glue application (6, 7), are transferred by means of a transfer element (10) to the containers (2) being moved past at the transfer element (10), wherein the respective glue application (6, 7) onto the label material (3a) takes place before the separation of the labels (3), with at least one glue application head (20), wherein the applying of the respective glue application (6, 7) onto the label material (3a) takes place in a conveying or feed direction (C) of this material upstream of the transfer element (10),
**characterised in that** the applying of the respective glue application (6, 7) onto the label material (3a) is carried out by intermittent activation of the at least one nozzle-type glue application head (20) or, respectively, by intermittent glue emission, in such a way that the labels (3), after the separation from the label material (3a), are provided in each case, on their end which is leading and/or trailing at the transfer to the containers (2), partially with a glue application (6, 7), preferably with a glue application running parallel to this end or, respectively, to this edge.

2. Method according to claim 1, **characterised in that** the web or strip-shaped label material (3a) is conveyed to the transfer element (10), and that the separating of the labels (3) from the label material (3a) takes place on the transfer element (10).

3. Method according to any one of the preceding claims, **characterised in that**, as the transfer element, a transfer drum (10) is used, preferably a vacuum drum, which is driven such as to circulate about a drum axis, preferably about a vertical drum axis.

4. Method according to any one of the preceding claims, **characterised in that** the labels (3), after the separation from the label material (3a), are provided with at least one glue application, which extends between the edges of the labels (3) leading as well as trailing at the transfer to the containers.

5. Method according to any one of the preceding claims, **characterised in that**, as the glue application head, a nozzle is used, for example a slot nozzle (20).

6. Method according to any one of the preceding claims, **characterised in that**, as the glue application head, a nozzle is used, for example a slot nozzle (20) with a plurality of nozzle openings arranged in a row.

7. Method according to any one of the preceding claims, **characterised in that** the label material (3a) is pressed in contact against the at least one glue application head (20), under a contact pressure.

8. Method according to claim 7, **characterised in that** the contact pressure is produced by the web tension of the label material (3a) in the region of the glue application head (20).

9. Method according to claim 7 or 8, **characterised in that** the contact pressure is produced by an element, such as a contact pressure roller, which presses the label material (3a) against the glue application head (20).

10. Method according to any one of the preceding claims, **characterised in that** the glue is a hot glue or a heated adhesive.

11. Method according to any one of the preceding claims, **characterised in that** the at least one glue application head is heated.

12. Method according to any one of the preceding claims, **characterised in that**, in the event of an interruption to the labelling process, the at least one glue application head (20) is moved away and/or pivoted away from the label material (3a).

13. Labelling station of a labelling machine for the labelling of bottles or similar containers (2) making use of a web or strip-shaped label material (3a), with at least one cutting station (13) for separating the labels from the label material (3a) with at least one gluing station or device (19) for applying a glue, as well as with a transfer element (10) for the transfer of the glued labels (3) to the containers (2) being moved past at the transfer element (10), wherein the gluing station (19) is provided in a transport direction (C) of the label material (3a) upstream of the cutting station (13), wherein the gluing station (19) is arranged in the conveying direction of the label material (3a) upstream of the transfer element (10) **characterised in that** the gluing station (19) is formed by at least one nozzle-type glue application head (20), and that the at least one glue application head (20) is configured for the controlled emission of the glue, preferably for the controlled intermittent emission of glue with a control valve (22), for example with an electrically or pneumatically actuatable control valve.

14. Labelling station according to claim 13, **characterised in that** the at least one glue application head (20) for applying the glue in the hot state, for example for the applying of a heated glue.

15. Labelling station according to claim 13 or 14, **characterised in that** the at least one glue application head (20) is configured for the applying of the glue under pressure.

16. Labelling station according to any one of preceding claims 13-15, **characterised in that** the at least one glue application head is formed from a slot nozzle (20), which comprises at least one slot-type nozzle opening (20.1) or a plurality of nozzle openings arranged in at least one row.

17. Labelling station according to claim 16, **characterised in that** the at least one nozzle opening (20.1) or the row of nozzle openings are oriented in an axial direction perpendicular or essentially perpendicular to the longitudinal extension of the label material (3a).

18. Labelling station according to any one of preceding claims 13-17, **characterised in that** the at least one glue application head (20) is connected to a source for the delivery of the glue under pressure.

19. Labelling station according to any one of preceding claims 13-18, **characterised in that** the at least one glue application head (20) is provided at the periphery of the transfer element (10), not circulating with this.

20. Labelling station according to any one of preceding claims 13-19, **characterised in that** the transfer element is a transfer drum (10), such as a vacuum drum, which can be driven such as to circulate about a drum axis.

21. Labelling station according to claim 20, **characterised in that** the cutting station (13) is provided at the periphery of the transfer drum (10), not circulating with this.

22. Labelling station according to any one of preceding claims 13-21, **characterised by** at least one conveying or feeding unit (14), by means of which the label material (3a) is delivered to the transfer element (10), wherein the at least one glue application head (20) is provided in the conveying direction (C) of the label material (3a) between the conveying or feeding unit (14) and the transfer element (10).

## Revendications

1. Procédé pour étiqueter des bouteilles ou des contenants (2) similaires en utilisant un matériau pour étiquettes (3a) présentant une forme de bande ou de ruban, dans lequel les étiquettes (3) à appliquer sur les contenants (2) sont produites par séparation du matériau pour étiquettes (3a) et sont pourvues chacune d'au moins une couche de colle (6, 7) et sont transférées à l'aide d'un élément de transfert (10) sur les contenants (2) déplacés le long de l'élément de transfert (10), dans lequel ladite couche de colle (6, 7) est appliquée sur le matériau pour étiquettes (3a) avant la séparation des étiquettes (3) à l'aide d'au moins une tête d'application de colle (20), dans lequel l'application de ladite couche de colle (6, 7) est effectuée sur le matériau pour étiquettes (3a) dans une direction de transport ou d'avancement (C) dudit matériau devant l'élément de transfert (10), **caractérisé en ce que** l'application de la couche de colle (6, 7) respective sur le matériau pour étiquettes (3a) est effectuée par un pilotage intermittent de l'au moins une tête d'application de colle (20) de type buse ou par une sortie de colle intermittente de telle manière que les étiquettes (3) sont chacune pourvues, après la séparation du matériau pour étiquettes (3a), au niveau de leur extrémité située à l'avant et/ou à l'arrière lors du transfert sur les contenants (2), en partie d'une couche de colle (6, 7), de préférence en partie d'une couche de colle s'étendant de manière parallèle par rapport à ladite extrémité ou à ladite arête.

2. Procédé selon la revendication 1, **caractérisé en ce que** le matériau pour étiquettes (3a) présentant une forme de bande ou une forme de ruban est amené à l'élément de transfert (10), et **en ce que** la séparation des étiquettes (3) du matériau pour étiquettes (3a) est effectuée sur l'élément de transfert (10).

3. Procédé selon la revendication 2, **caractérisé en ce qu'**un cylindre de transfert (10), de préférence un cylindre sous vide, est utilisé en tant qu'élément de transfert, lequel est entraîné en rotation autour d'un axe de cylindre, de préférence autour d'un axe de cylindre vertical.

4. Procédé selon l'une quelconque des revendications précédentes, **caractérisé en ce que** les étiquettes (3) sont pourvues, après la séparation du matériau pour étiquettes (3a), d'au moins une couche de colle, qui s'étend entre les arêtes, situées à l'avant et situées à l'arrière lors du transfert sur les contenants, des étiquettes (3).

5. Procédé selon l'une quelconque des revendications précédentes, **caractérisé en ce qu'**une tuyère, en particulier une tuyère à fente (20), est utilisée en tant que tête d'application de colle.

6. Procédé selon l'une quelconque des revendications précédentes, **caractérisé en ce qu'**une tuyère, par exemple une tuyère à fente (20) pourvue de plusieurs ouvertures de tuyère disposées en une rangée, est utilisée en tant que tête d'application de colle.

7. Procédé selon l'une quelconque des revendications précédentes, **caractérisé en ce que** le matériau pour étiquettes (3a) repose contre l'au moins une tête d'application de colle (20), en étant appliqué par une pression d'application.

8. Procédé selon la revendication 7, **caractérisé en ce que** la pression d'application est produite par la tension de bande du matériau pour étiquettes (3a) dans la zone de la tête d'application de colle (20).

9. Procédé selon la revendication 7 ou 8, **caractérisé en ce que** la pression d'application est produite par un élément appliquant par pression le matériau pour étiquettes (3a) contre la tête d'application de colle (20), en particulier par un rouleau d'application par pression.

10. Procédé selon l'une quelconque des revendications précédentes, **caractérisé en ce que** la colle est une colle thermofusible ou une colle à chaud.

11. Procédé selon l'une quelconque des revendications précédentes, **caractérisé en ce que** l'au moins une tête d'application de colle est chauffée.

12. Procédé selon l'une quelconque des revendications précédentes, **caractérisé en ce que** lors d'une interruption du processus d'étiquetage, l'au moins une tête d'application de colle (20) est déplacée et/ou pivotée de manière à s'éloigner du matériau pour étiquettes (3a).

13. Station d'étiquetage d'une machine à étiqueter pour étiqueter des bouteilles ou des contenants (2) similaires en utilisant un matériau pour étiquettes (3a) présentant une forme de bande ou de ruban, comprenant au moins une station de découpage (13) pour séparer les étiquettes du matériau pour étiquettes (3a), comprenant au moins une station ou un dispositif d'encollage (19) pour appliquer une colle ainsi qu'au moins un élément de transfert (10) pour transférer les étiquettes (3) encollées sur les contenants (2) déplacés le long de l'élément de transfert (10), dans laquelle la station d'encollage (19) est prévue dans une direction de transport (C) du matériau pour étiquettes (3a) avant la station de découpage (13), dans laquelle la station d'encollage (19) est disposée dans une direction de transport du matériau pour étiquettes (3a) avant l'élément de transfert (10), **caractérisée en ce que** la station d'encollage (19) est formée par au moins une tête d'application de colle (20) de type tuyère, et **en ce que** l'au moins une tête d'application de colle (20) est réalisée afin de sortir de manière commandée la colle, de préférence afin de sortir de la colle de manière commandée par intermittence avec une soupape de commande (22), par exemple avec une soupape de commande pouvant être actionnée de manière électrique ou de manière pneumatique.

14. Station d'étiquetage selon la revendication 13, **caractérisée en ce que** l'au moins une tête d'application de colle (20) est réalisée afin de distribuer de la colle dans l'état chaud, par exemple afin de distribuer une colle à chaud.

15. Station d'étiquetage selon la revendication 13 ou 14, **caractérisée en ce que** l'au moins une tête d'application de colle (20) est réalisée de manière à distribuer la colle sous pression.

16. Station d'étiquetage selon l'une quelconque des revendications précédentes 13 à 15, **caractérisée en ce que** l'au moins une tête d'application de colle est formée par une tuyère à fente (20), qui présente au moins une ouverture de tuyère (20.1) de type fente ou plusieurs ouvertures de tuyère disposées en au moins une rangée.

17. Station d'étiquetage selon la revendication 16, **caractérisée en ce que** l'au moins une ouverture de tuyère (20.1) ou la rangée des ouvertures de tuyère sont orientées dans une direction axiale de manière perpendiculaire ou de manière sensiblement perpendiculaire par rapport à l'extension longitudinale du matériau pour étiquettes (3a).

18. Station d'étiquetage selon l'une quelconque des revendications précédentes 13 à 17, **caractérisée en ce que** l'au moins une tête d'application de colle (20) est reliée à une source pour amener de la colle sous pression.

19. Station d'étiquetage selon l'une quelconque des revendications précédentes 13 à 18, **caractérisée en ce que** l'au moins une tête d'application de colle (20) est prévue au niveau de la périphérie de l'élément de transfert (10) de manière à ne pas tourner avec ce dernier.

20. Station d'étiquetage selon l'une quelconque des revendications précédentes 13 à 19, **caractérisée en ce que** l'élément de transfert est un cylindre de transfert (10) pouvant être entraîné en rotation autour d'un axe de cylindre, par exemple un cylindre sous vide.

21. Station d'étiquetage selon la revendication 20, **caractérisée en ce que** la station de découpage (13) est prévue au niveau de la périphérie du cylindre de transfert (10) de manière à ne pas tourner avec ce dernier.

22. Station d'étiquetage selon l'une quelconque des revendications précédentes 13 à 21, **caractérisée par** au moins une unité de transport ou d'avancement (14), par l'intermédiaire de laquelle le matériau pour étiquettes (3a) est amené à l'élément de transfert (10), dans laquelle l'au moins une tête d'application de colle (20) est prévue dans la direction de transport (C) du matériau pour étiquettes (3a) entre l'unité de transport ou d'avancement (14) et l'élément de transfert (10).
